# EUROPEAN PATENT SPECIFICATION

(11) **EP 3 154 371 B1**
(45) Date of publication and mention of the grant of the patent: **02.12.2020**
(21) Application number: 15727643.7
(22) Date of filing: 05.06.2015
(51) Int. Cl.: A23L 3/16, A23L 3/28, A23L 2/46, A23L 2/60, A23L 2/50

(54) **SYSTEM AND METHOD FOR PROCESSING LIQUID OR SEMI-LIQUID FOOD PRODUCTS**
SYSTEM UND VERFAHREN ZUR VERARBEITUNG VON FLÜSSIGEN ODER HALBFLÜSSIGEN LEBENSMITTELPRODUKTEN
SYSTÈME ET PROCÉDÉ DE TRAITEMENT DE PRODUITS ALIMENTAIRES LIQUIDES OU SEMI-LIQUIDES

(30) Priority: 10.06.2014 SE 1450700
(43) Date of publication of application: 19.04.2017
(73) Proprietor: Tetra Laval Holdings & Finance SA, 1009 Pully (CH)
(72) Inventor: STJERNBERG, Göran, S-224 75 Lund (SE); SIMONSSON, Micael, S-224 66 Lund (SE)
(74) Representative: Tetra Pak - Patent Attorneys SE
(86) International application number: PCT/EP2015/062555
(87) International publication number: WO 2015/189098

(56) References cited:
- EP-A1- 2 567 712
- CN-A- 102 551 131
- GB-A- 330 368
- US-A- 6 145 276
- US-A1- 2004 191 374
- MAHESH V. BULE ET AL: "Furan formation during UV-treatment of fruit juices", FOOD CHEMISTRY, vol. 122, no. 4, 15 October 2010 (2010-10-15), pages 937-942, XP055208286, ISSN: 0308-8146, DOI: 10.1016/j.foodchem.2010.03.116
- TRAN M T T ET AL: "Ultraviolet treatment of orange juice", INNOVATIVE FOOD SCIENCE AND EMERGING TECHNOLOGIES, ELSEVIER, AMSTERDAM, NL, vol. 5, no. 4, 1 December 2004 (2004-12-01), pages 495-502, XP004779949, ISSN: 1466-8564, DOI: 10.1016/J.IFSET.2004.08.002

## Description

### Technical Field

The invention generally relates to the field of liquid food processing. More particularly, it is presented a system and a method for processing a liquid or semi-liquid food product in a more energy efficient manner.

### Background of the invention

In order to meet increasing demands for energy efficient food processing, food processing companies in different parts of the world are looking into new technologies that enable reduction of unwanted microorganisms in food products while keeping energy consumption low. Heat treatment, which is the prevailing technology of today for the purpose, is namely using a substantial amount of energy, and if it would be possible to replace this technology with another both carbon footprint, that is, the carbon dioxide emission caused by the processing, and the total cost of operation can be lowered significantly.

In addition to the cost and environmental aspect, it is in the interest of many food processing companies to replace heat treatment by another technology in order to avoid changes of product properties that may occur during the heat treatment. A side effect of heat treating the product is namely that flavor, color and other product properties may be changed. Of course, if heating the product could be avoided, some or all of the product properties did not have to be changed during the processing procedure.

Today, some of the effects on the product properties caused by the heat treatment can be avoided by quickly heat the product to a temperature the unwanted microorganisms do not withstand and then quickly cooled down. For instance, steam injection systems and steam infusion systems can be used in this way. However, avoiding the unwanted change of product properties is often at the expense of higher energy consumption.

Recently it has been suggested to use ultra violet (UV) light to reduce the number of unwanted microorganisms in water to be used in beverage production. Further, it has also been suggested to use UV light to reduce the number of unwanted microorganisms in syrups or sweeteners used for beverage production. Some relevant prior art is described in patent document CN102551131A and in "Furan formation during UV-treatment of fruit juices" by Mahesh V. Bule et al, Food Chemistry vol 122, no. 4, pages 937-342.

### Summary

Accordingly, the present invention preferably seeks to mitigate, alleviate or eliminate one or more of the above-identified deficiencies in the art and disadvantages singly or in any combination and solves at least the above mentioned problems.

According to a first aspect it is provided a system for processing a liquid or semi-liquid food product, said food product being a composition of a first sub-composition having a low concentration and a second sub-composition having a high concentration, wherein said high concentration is greater than said low concentration, said system comprising an ultra violet (UV) light treatment apparatus for reducing an amount of microorganisms in said first sub-composition, and a blending apparatus for aseptically combining said first sub-composition and said second sub-composition into said liquid or semi-liquid food product.

In other words, the first sub-composition should be understood to have higher water content than the second sub-composition.

The system comprises a heat treatment apparatus for reducing the amount of microorganisms in said first sub-composition.

The heat treatment apparatus may be configured to heat said first sub-composition to a temperature of 75 degrees C.

A first amount of energy needed for reducing the amount microorganisms to a set level for a certain amount of said first sub-composition by using said UV light treatment apparatus and said heat treatment apparatus is lower than a second amount of energy needed for reducing the amount of microorganisms to said set level for said certain amount of said first sub-composition by using said heat treatment apparatus solely.

A wavelength of said UV light treatment apparatus may be adapted to an ingredient comprised in said first sub-composition.

A wavelength of said UV light treatment apparatus may be adapted to a concentration of sugar comprised in said first sub-composition.

A wavelength of said UV light treatment apparatus may be adapted to a light transmittance of said first sub-composition.

An effect of said UV light treatment apparatus may be adapted to an ingredient comprised in said first sub-composition.

An effect of said UV light treatment apparatus may be adapted to a concentration of sugar comprised in said first sub-composition.

An effect of said UV light treatment apparatus may be adapted to a light transmittance of said first sub-composition.

The UV light treatment apparatus may comprise at least one UV light emitting diode (LED).

The first sub-composition may comprise water.

The first sub-composition may comprise a sugar solution.

According to a second aspect it is provided a method for processing a liquid or semi-liquid food product, said food product being a composition of a first sub-composition having a low concentration and a second sub-composition having a high concentration, wherein said high concentration is greater than said low concentration, said method comprising reducing an amount of microorganisms by irradiating said first sub-composition with ultra violet (UV) light, and aseptically combining said first sub-composition and said second sub-composition into said liquid or semi-liquid food product.

The method may further comprise reducing an amount of microorganisms by heat treating said first sub-composition.

The method may further comprise preparing said second sub-composition by reducing an amount of microorganisms in said second sub-composition and packing said second sub-composition in an aseptic container before combining said first sub-composition and said second sub-composition.

According to a third aspect it is provided a liquid or semi-liquid food product obtained by the method according to the second aspect.

### Brief description of the drawings

The above, as well as additional objects, features and advantages, will be better understood through the following illustrative and non-limiting detailed description of preferred embodiments, with reference to the appended drawings, wherein:
Fig 1 illustrates a beverage processing system for juice or nectars.
Fig 2 illustrates another beverage processing system in which sugar is added.
Fig 3 illustrates yet another beverage processing system in which sugar is added and where UV light is used for reducing a number of unwanted microorganisms.
Fig 4 illustrates still another beverage processing line in which UV light is used for reducing the amount of unwanted microorganisms in water and a concentrate is aseptically blended with the water.
Fig 5 illustrates still another beverage processing line in which UV light is used for reducing the amount of unwanted microorganisms in a sugar solution and a concentrate is aseptically blended with the sugar solution.
Fig 6 illustrates still another beverage processing line in which heat treatment and UV light is used for reducing the amount of unwanted microorganisms in a sugar solution and a concentrate is aseptically blended with the sugar solution.
Fig 7 illustrates still another beverage processing line in which heat treatment and UV light is used for reducing the amount of unwanted microorganisms in a sugar solution and a concentrate is aseptically blended with the sugar solution.
Fig 8 illustrates still another beverage processing line in which heat treatment and UV light is used for reducing the amount of unwanted microorganisms in a sugar solution and a concentrate is aseptically blended with the sugar solution.
Fig 9 illustrates a flowchart presenting the steps of a method for processing a liquid or semi-liquid food product.

### Detailed description of preferred embodiments

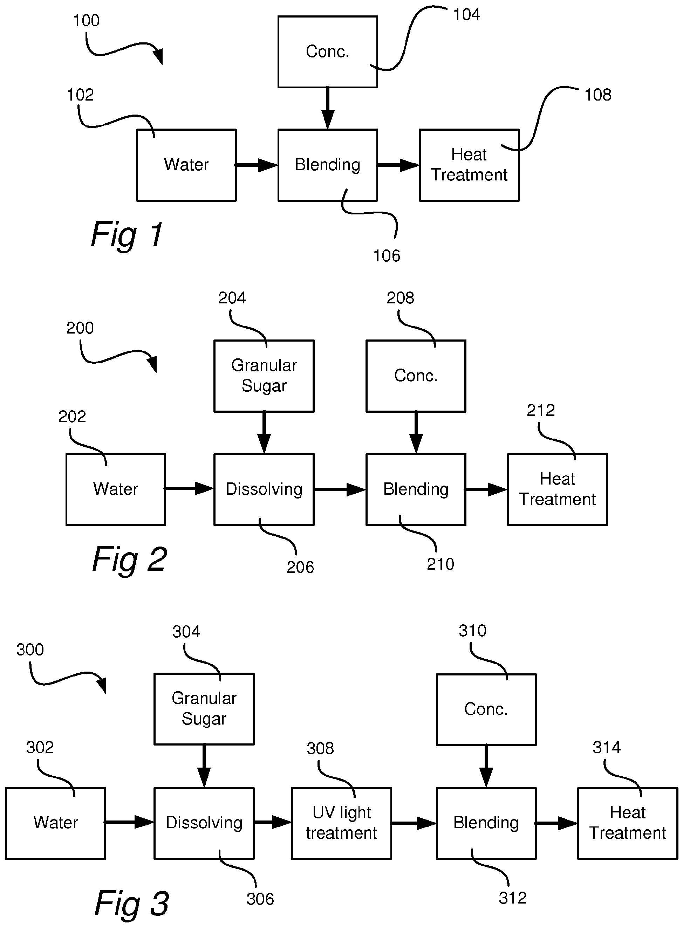

Fig 1 generally illustrates an example of a commonly used beverage line 100 that could be used for processing a juice made from a concentrate. In this example, water 102 and concentrate 104 are blended in a blending apparatus 106 into the juice and thereafter transferred to a heat treatment apparatus 108 in which the juice is heated and held at a temperature that provides for that unwanted microorganisms, such as pathogene microorganisms, are killed, and thereby making the juice safe to consume.

In order to provide for that the water 102 does not affect the properties of the juice the water 102 may be pre-treated in different ways. For instance, in order to remove insoluble solids sand filtration may be used, in order to remove color active carbone filtration may be used and in order to reduce dissolved salts membrane filtration may be used.

The concentrate 104 is often delievered to the beverage line 100 in tanks. In order to prevent microbacterial growth the tanks may be cooled, for instance by being equipped with cooling jackets.

The blending apparatus 106 may be one or several tanks provided with agitators for batch wise mixing of juice. Alternatively, the blending apparatus 106 may comprise an in-line mixer adapted to continuously mix the water 102 and the concentrate 104. In the latter in-line mixing set up, a so-called Brix meter may be used for making sure that the correct amounts of water 102 and concentrate 104 are mixed.

The heat treatment apparatus 108 may be a plate heat exchanger or a tubular heat exchanger. In case the juice contains pulp it is advantageous to use a tubular heat exchanger since the risk for agglomeration caused by the pulp is lower in this compared to the plate heat exchanger.

Fig 2 illustrates an example of a beverage processing system 200. In this example, water 202 and granular sugar 204 are transferred to a dissolving apparatus 206 providing for that the granular sugar 204 is dissolved and a sugar solution is formed. After having formed the sugar solution, this is blended with a concentrate 208 by a blending apparatus 210 and thereafter heat treated by a heat treatment apparatus 212 such that a final product is formed.

The dissolving apparatus 206 may comprise a dissolving tank for receiving the granular sugar 204, a pump providing for that the water and the sugar are circulated and agitation is maintained, and a cross-flow filter providing for that dissolved sugar is separated from sugar crystals such that the sugar crystals can be fed back to the dissolving tank.

The blending apparatus 210 and the heat treatment apparatus 212 may be similar to the blending apparatus 106 and heat treatment apparatus 108 of fig 1, respectively.

Fig 3 illustrates an example of a beverage processing system 300 in some ways similar to the beverage processing system 200 illustrated in fig 2.

In line with the beverage processing system 200, water 302 and granular sugar 304 are dissolved by a dissolving apparatus 306. However, unlike the system 200, a sugar solution formed in the dissolving apparatus 306 is transferred to an ultra violet (UV) light treatment apparatus 308 configured to irradiate the sugar solution such that unwanted microorganisms, such as pathogene microorganisms, are destroyed.

After having UV light treated the sugar solution this is transferred to a blending apparatus 312 in which it is blended with a concentrate 310. The blending apparatus 312 may be similar to the blending apparatuses 106, 210 illustrated in fig 1 and 2, respectively.

In order to provide for that unwanted microorganisms introduced together with the concentrate 310 or from the surroundings during blending, a sugar solution and concentrate blend output from the blending apparatus 312 is transferred to a heat treatment apparatus 314 in which the blend is heated and held at a temperature, such as 85-90 degrees C for orange juice, in order to kill the unwanted microorganisms.

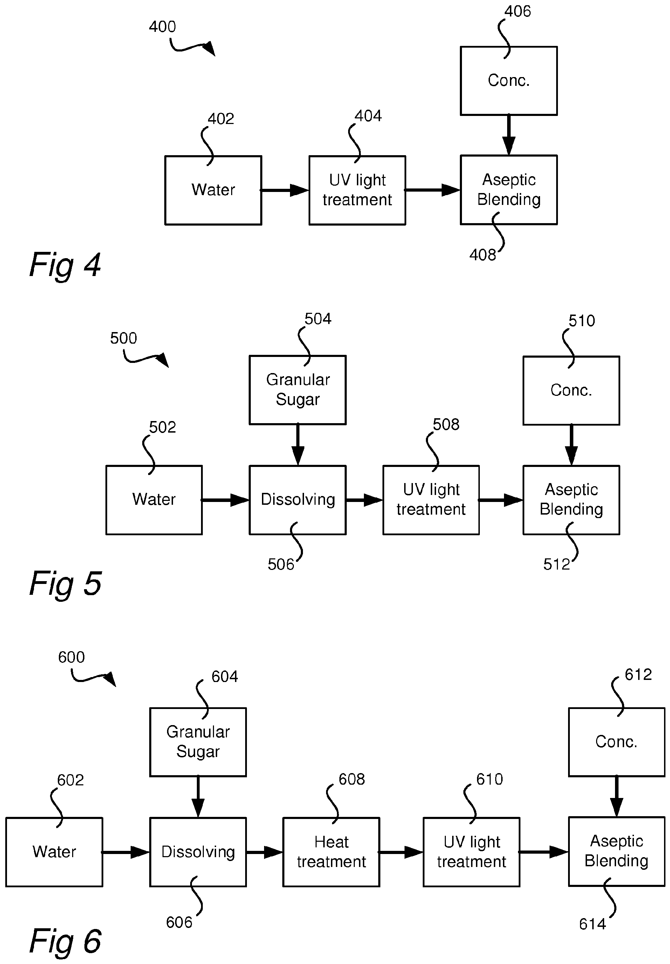

Fig 4 illustrates an example of a beverage processing line 400 in which water 402 is fed to a UV light treatment apparatus 404 configured to emit UV light on the water 402 such that unwanted microorganisms, such as pathogene microorganisms, are destroyed. By destroying the unwanted microorganisms, the water 402 can be made safe to consume. Further, the amount of unwanted microorganisms can be lowered to such a low level that the risk that microbiological growth of e.g. bacteria will occur before the water, possibly combined with other ingredients, is packed in a package preventing bacteria or other microorganisms to come in contact with the water and/or blocking light and/or oxygen from coming in contact with the water. In particular so-called UVC light, ranging from 100 to 280 nm, has been found to be effective for destroying unwanted microorganisms.

After having UV light treated the water 402, a concentrate 406 is blended with the water 402 in a blending apparatus 408. In order to provide for that the UV light treated water is not reinfected by unwanted microorganisms the blending can be so-called aseptic blending, that is, blending made under aseptic conditions. One way of aseptically blend the concentrate 406 and the water 402 is to inject the concentrate into a stream of water 402 after having UV treated this by using an aseptic dosing device, such as Tetra FlexDos™ marketed by Tetra Pak.

An advantage of having the concentrate 406 aseptically blended with the water 402 is that there is no need for any heat treatment, which have the positive effect that the energy consumption is lowered, and as a direct effect that the operational costs can be lowered. Further, in some cases, by leaving out heat exchangers, being quite complex equipment built by a substantial amount of stainless steel, the initial cost for a processing line can be lowered as well.

The concentrate 406 may be provided in different ways. For instance, the concentrate may be provided in aseptic tanks. Another possibility is to provide the concentrate 406 is in aseptic bags. Producing and packing the concentrate 406 can be made at one site, e.g close to where oranges are growing, and the beverage processing line 400 may be placed at a different site, e.g. close to the end customers.

Although not illustrated, after having blended the water and the concentrate into a blend, that is, a final product, this can be transferred to a filling machine arranged to fill the final product in aseptic packages.

Fig 5 illustrates a beverage processing line 500 in which water 502 and sugar 504, such as granular sugar, is dissolved in a dissolving apparatus 506 into a sugar solution that is UV light treated by a UV light treatment apparatus 508. The reason for UV light treating the sugar solution is the same as in, for instance the beverage processing line 300 illustrated in fig 3, namely to destroy microorganisms such that a final product is safe to consume and/or such that the properties of the final produt is not negatively affected by unwanted microorganisms.

After the sugar solution is UV light treated, this and a concentrate 510 is blended in a blending apparatus 512. For the reasons mentioned above, it is advantageous to blend aseptically.

Unlike the beverage processing line 300 illustrated in fig 3, sugar 504 is dissolved in the water 502 before this is UV light treated. With this approach it is made possible to also process products containing added sugar in an efficient manner.

Since a high sugar content increases the risk of microbacterial growth, the approach of providing the sugar solution by dissolving sugar in water, UV light treat the sugar solution and aseptically blend the UV light treated sugar solution with a concentrate is in many ways an efficient approach. The water is often an available resource. The sugar can be stored in a solid form making it less pronent to microbacterial growth and the concentrate, being provided in aseptic tanks, or similar, can be stored for long period of time, in most cases for months. Altogether this means that the different ingredients for making the product are either avaiable, such as the water, or can be stored for a relatively long period of time, such as the sugar and the concentrate. Further, the UV light treatment apparatus 508 provides for that operational costs as well as capital expenditures can be kept low.

Further, it has been realized that by combining UV light treatment and heat treatment, even in case the heat treatment temperature is lowered, e.g. from 85 degrees C to 75 degrees C, a reduction of microorganisms can be improved. For instance, it has been realized that bacteria spores, such as Bacillus Subtilis, mould spores and yeast spores can be reduced efficiently by using UV light treatment. Therefore, in addition to lowering operational costs, using a combination of UV light treatment and heat treatment, set to a lower heat treatment temperature compared to when using heat treatment solely for reducing unwanted microorganisms, can also provide for a more efficient reduction of unwanted microorganisms.

Fig 6 illustrates an example of a beverage processing line 600 in which water 602 and sugar 604 is made into a sugar solution by having the sugar being dissolved in the water using a dissolving apparatus 606. After the sugar solution is formed this can heat treated by heat treatment apparatus 608 and next UV light treated by a UV light treatment apparatus 610 before a concentrate 612 and the heat treated and UV light treated sugar solution is blended, e.g. aseptically blended, to a product.

A reason for both heat treating the sugar solution in order to kill unwanted microorganisms and UV light treating the sugar solution in order to destroy unwanted microorganisms is that in case of a high Brix content, that is, having a large amount of sugar being dissolved in the water, the transmittance of the sugar solution can be affected such that UV light cannot provide for that microorganisms to a degree set to provide for the product is safe to consume can be reached. Therefore, by having the transmittance affected in this way, the UV light treatment can be supplemented by the heat treatment. In other words, it has been realized that it is beneficial from many aspects to combine the two technologies.

By having a UV light treatment apparatus 610 placed after the heat treatment apparatus 608, a target temperature of the heat treatment apparatus 608 can be lowered and hence save energy. For instance, it has been shown that a same amount of microorganisms can be reduced for a sugar solution when being treated solely by a heat treatment apparatus at a target temperature of 85 degrees C as when heat treating it at a target temperature of 75 degrees C in combination with treating it with a UV light treatment apparatus.

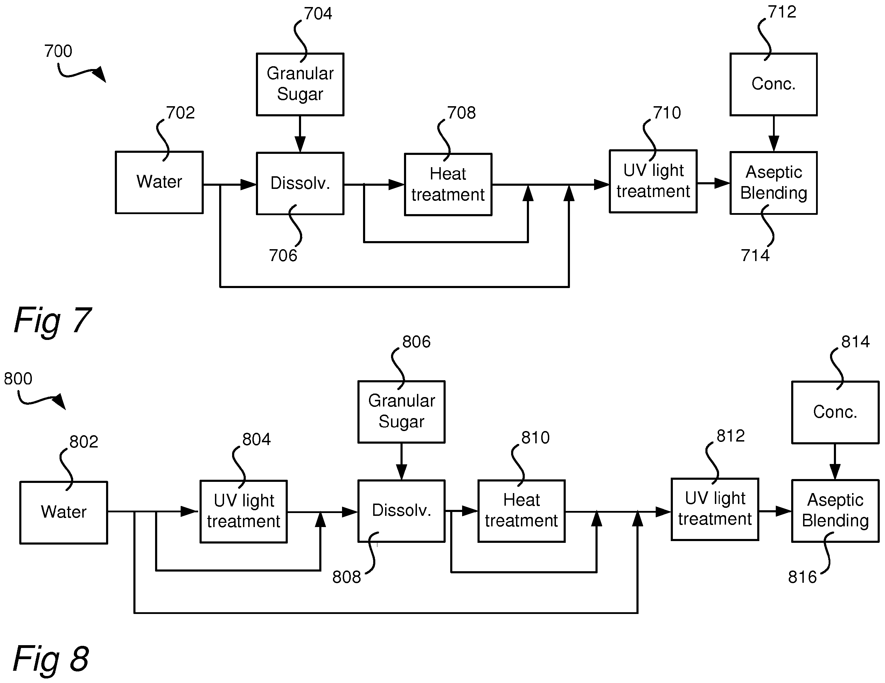

Fig 7 illustrates an example of a flexible beverage processing line 700. Water 702 and sugar 704 can be dissolved into a sugar solution by a dissolving apparatus 706. After forming the sugar solution, this can be heat treated in a heat treatment apparatus 708 and UV light treated in a UV light treatment apparatus 710, in line with what was described in relation to the beverage processing line 600 illustrated in fig 6. After having heat treated and UV light treated the sugar solution this can be aseptically blended with a concentrate 712 in a blending apparatus 714.

In order to provide for that a wide variety of products can be processed in the beverage processing line 700, connection pipe and valves can be provided such that water can be transferred directly to the UV light treatment apparatus 710 if, for instance, a product not containing added sugar is to be processed. Connection pipes and valves can also be provided such that the heat treatment apparatus 708 can be circumvented. This may be useful if processing a product to which a small amount of sugar has been added, thereby only affecting transmittance to a small degree such that UV light treatment can be used solely for destroying unwanted microorganisms.

Fig 8 illustrates another example of a possible design of a flexible beverage processing line 800. Unlike the previously mentioned beverage processing lines, water 802 is transferred to a UV light treatment apparatus 804 such that unwanted microorganisms in the water 802 are destroyed. After having UV light treated the water sugar 806 is dissolved in a dissolving apparatus 808 such that a sugar solution is formed. The sugar solution can be transferred to a heat treatment apparatus 810 providing for that unwanted microorganisms in the sugar solution are killed, at least to a certain extent. Next, the heat treated sugar solution is transferred to a UV light treatment apparatus 812 exposing the sugar solution for UV light such that unwanted microorganisms are destroyed. Next, a concentrate 814 and the heat treated and UV light treated sugar solution are blended to a final product in a blending apparatus 816.

Connection pipes and valves may be provided such that the water 802 can be transferred directly to the UV light treatment apparatus 812 if e.g. no sugar is to be dissolved. Further, connection pipes and valves may also be provided such that the water can be transferred directly to the dissolving apparatus 808, that is, circumventing the UV light treatment apparatus 804. This may for instance be of interest if the incoming water does not contain any unwanted microorganisms and therefore that there is no reason to UV light treat this water.

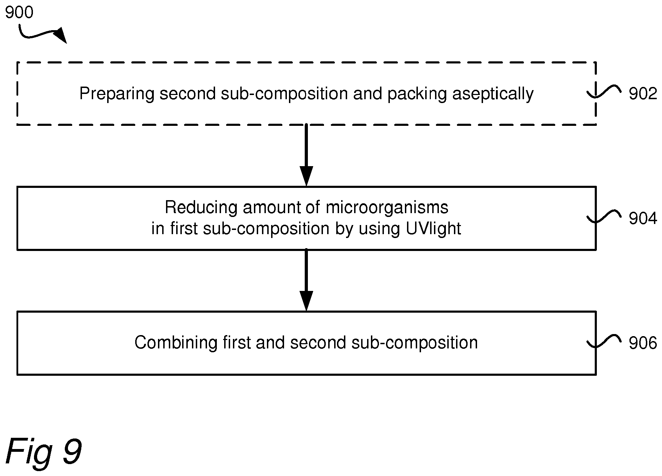

Fig 9 illustrates a method 900 for beverage processing. In a first optional step 902, a second sub-composition of a final product is prepared and aseptically packed. For instance, the second sub-composition may after being prepared comprise the content of the final product except for water or, alternatively, except for water and sugar. In order to make sure that there are no unwanted microorganisms in the second sub-composition it may be heat treated during preparation, or in any other way provide for the unwanted microorganisms are removed, killed or destroyed.

In a second step 904, an amount of microorganisms in a first sub-composition can be reduced by using UV light. The first sub-composition may be water or a sugar solution comprising sugar dissolved in water. As mentioned above, the UV light treatment may follow after a heat treatment.

In a third step 906 the first and second sub-composition are combined into the final product. This may, as described above, be made by aseptically blending the first and second sub-composition in a blending apparatus.

Although not illustrated, a number of UV lamps may be placed after each other, either in one and the same UV light treatment apparatus or in different UV light treatment apparatuses. This can be beneficial for many reasons. For example, by having more than one UV lamp one UV lamp may be replaced with less effect on the production. Further, by having several UV lamps placed after each other different wave lengths and/or effect may be used for the UV lamps providing for that a combination of different wave lengths and effects may be used to heat treat a stream of sugar solution, water or any other liquid fluid.

Also not illustrated, sensors may be placed in the beverage processing lines. The data gathered from the sensors may be used for adapting settings of the beverage processing lines. For instance, based on data output from the sensors the wavelength and/or the effect of the UV light treatment apparatuses and/or, if heat treatment apparatuses are used in the beverage processing lines, heat treatment temperature and/or holding time may be adapted. The sensor may for instance measure amount of fouling, e.g. by measuring pressure differences, or light transmittance, either directly by using a light transmittance sensor, or indirectly by measuring the light transmittance on the first and second sub-composition to determine the light transmittance of the product. Apart from using sensor data to adapt the settings, the sensor data may be used for discarding product not fulfilling set conditions.

The aseptic filling, i.e. aseptically packing the product in aseptic packages, can be replaced by so-called hot fill, which means that the product is filled heated into the package. Since the product is heated when being filled and microorganisms are killed by the heat, this approach will provide for that the microorganisms do not find their way into the package.

The expressions "removing microorganisms", "killing microorganisms", "destroying microorganisms" or the like mentioned above should be understood as that the amount of microorganisms that can be harmful to humans or that can negatively affect the properties of product, such as miscoloring it and flavor changes, are reduced.

The term "unwanted microorganisms" should in the same way be understood to be microorganisms, such as bacteria, yeast spores, mould spores and viruses, that can be harmful to humans and that can negatively affect product properties.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A system for processing a liquid or semi-liquid food product, said food product being a composition of a first sub-composition having a low concentration and a second sub-composition having a high concentration, wherein said high concentration is greater than said low concentration, said system comprising
an ultra violet (UV) light treatment apparatus for reducing an amount of microorganisms in said first sub-composition,
a blending apparatus for aseptically combining said first sub-composition and said second sub-composition into said liquid or semi-liquid food product, and
a heat treatment apparatus for reducing the amount of microorganisms in said first sub-composition, wherein
a first amount of energy needed for reducing the amount microorganisms to a set level for a certain amount of said first sub-composition by using said UV light treatment apparatus and said heat treatment apparatus is lower than a second amount of energy needed for reducing the amount of microorganisms to said set level for said certain amount of said first sub-composition by using said heat treatment apparatus solely.

2. The system according to claim 1, wherein said heat treatment apparatus is configured to heat said first sub-composition to a temperature of 75 degrees C.

3. The system according to any of the preceding claims, wherein a wavelength of said UV light treatment apparatus is adapted to an ingredient comprised in said first sub-composition.

4. The system according to any of the preceding claims, wherein a wavelength of said UV light treatment apparatus is adapted to a concentration of sugar comprised in said first sub-composition.

5. The system according to any of the preceding claims, wherein a wavelength of said UV light treatment apparatus is adapted to a light transmittance of said first sub-composition.

6. The system according to any of the preceding claims, wherein an effect of said UV light treatment apparatus is adapted to an ingredient comprised in said first sub-composition.

7. The system according to any of the preceding claims, wherein an effect of said UV light treatment apparatus is adapted to a concentration of sugar comprised in said first sub-composition.

8. The system according to any of the preceding claims, wherein an effect of said UV light treatment apparatus is adapted to a light transmittance of said first sub-composition.

9. The system according to any of the preceding claims, wherein said UV light treatment apparatus comprises at least one UV light emitting diode (LED).

10. The system according to any one of the preceding claims, wherein said first sub-composition comprises water.

11. The system according to any one of the preceding claims, wherein said first sub-composition comprises a sugar solution.

12. A method for processing a liquid or semi-liquid food product, said food product being a composition of a first sub-composition having a low concentration and a second sub-composition having a high concentration, wherein said high concentration is greater than said low concentration, said method comprising
reducing an amount of microorganisms by irradiating said first sub-composition with ultra violet (UV) light,
aseptically combining said first sub-composition and said second sub-composition into said liquid or semi-liquid food product, and
reducing, with a heat treatment apparatus, the amount of microorganisms in said first sub-composition, wherein
a first amount of energy needed for reducing the amount microorganisms to a set level for a certain amount of said first sub-composition by using said UV light treatment apparatus and said heat treatment apparatus is lower than a second amount of energy needed for reducing the amount of microorganisms to said set level for said certain amount of said first sub-composition by using said heat treatment apparatus solely.

13. The method according to claim 12, said method further comprising
preparing said second sub-composition by reducing an amount of microorganisms in said second sub-composition and packing said second sub-composition in an aseptic container before combining said first sub-composition and said second sub-composition.

## Patentansprüche

1. System zum Verarbeiten eines flüssigen oder halbflüssigen Lebensmittelprodukts, wobei das Lebensmittelprodukt eine Zusammensetzung aus einer ersten Teilzusammensetzung mit einer niedrigen Konzentration und einer zweiten Teilzusammensetzung mit einer hohen Konzentration ist, wobei die hohe Konzentration größer als die niedrige Konzentration ist, wobei das System umfasst:
einen Apparat zur Behandlung mit ultraviolettem (UV) Licht, um eine Menge an Mikroorganismen in der ersten Teilzusammensetzung zu reduzieren,
einen Mischapparat, um die erste Teilzusammensetzung und die zweite Teilzusammensetzung aseptisch zu dem flüssigen oder halbflüssigen Lebensmittelprodukt zu kombinieren, und
einen Wärmebehandlungsapparat, um die Menge an Mikroorganismen in der ersten Teilzusammensetzung zu reduzieren, wobei
eine erste Menge an Energie, die zum Reduzieren der Menge an Mikroorganismen auf ein Sollniveau für eine bestimmte Menge der ersten Teilzusammensetzung benötigt wird, indem der Apparat zur UV-Lichtbehandlung und der Wärmebehandlungsapparat verwendet werden, niedriger als eine zweite Menge an Energie ist, die zum Reduzieren der Menge an Mikroorganismen auf das Sollniveau für die bestimmte Menge der ersten Teilzusammensetzung benötigt wird, indem nur der Wärmebehandlungsapparat verwendet wird.

2. System nach Anspruch 1, wobei der Wärmebehandlungsapparat ausgelegt ist, um die erste Teilzusammensetzung auf eine Temperatur von 75 Grad C zu erwärmen.

3. System nach einem der vorhergehenden Ansprüche, wobei eine Wellenlänge des Apparats zur UV-Lichtbehandlung an einen Bestandteil angepasst ist, der in der ersten Teilzusammensetzung enthalten ist.

4. System nach einem der vorhergehenden Ansprüche, wobei eine Wellenlänge des Apparats zur UV-Lichtbehandlung an eine in der ersten Teilzusammensetzung enthaltene Zuckerkonzentration angepasst ist.

5. System nach einem der vorhergehenden Ansprüche, wobei eine Wellenlänge des Apparats zur UV-Lichtbehandlung an eine Lichtdurchlässigkeit der ersten Teilzusammensetzung angepasst ist.

6. System nach einem der vorhergehenden Ansprüche, wobei ein Effekt des Apparats zur UV-Lichtbehandlung an einen Bestandteil angepasst ist, der in der ersten Teilzusammensetzung enthalten ist.

7. System nach einem der vorhergehenden Ansprüche, wobei ein Effekt des Apparats zur UV-Lichtbehandlung an eine in der ersten Teilzusammensetzung enthaltene Zuckerkonzentration angepasst ist.

8. System nach einem der vorhergehenden Ansprüche, wobei ein Effekt des Apparats zur UV-Lichtbehandlung an eine Lichtdurchlässigkeit der ersten Teilzusammensetzung angepasst ist.

9. System nach einem der vorhergehenden Ansprüche, wobei der Apparat zur UV-Lichtbehandlung mindestens eine UV-Licht emittierende Diode (LED) umfasst.

10. System nach einem der vorhergehenden Ansprüche, wobei die erste Teilzusammensetzung Wasser umfasst.

11. System nach einem der vorhergehenden Ansprüche, wobei die erste Teilzusammensetzung eine Zuckerlösung umfasst.

12. Verfahren zum Verarbeiten eines flüssigen oder halbflüssigen Lebensmittelprodukts, wobei das Lebensmittelprodukt eine Zusammensetzung aus einer ersten Teilzusammensetzung mit einer niedrigen Konzentration und einer zweiten Teilzusammensetzung mit einer hohen Konzentration ist, wobei die hohe Konzentration größer als die niedrige Konzentration ist, wobei das Verfahren umfasst:
Reduzieren einer Menge an Mikroorganismen, indem die erste Teilzusammensetzung mit ultraviolettem (UV) Licht bestrahlt wird,
aseptisches Kombinieren der ersten Teilzusammensetzung und der zweiten Teilzusammensetzung zu dem flüssigen oder halbflüssigen Lebensmittelprodukt, und
Reduzieren der Menge an Mikroorganismen in der ersten Teilzusammensetzung mit einem Wärmebehandlungsapparat, wobei
eine erste Menge an Energie, die zum Reduzieren der Menge an Mikroorganismen auf ein Sollniveau für eine bestimmte Menge der ersten Teilzusammensetzung benötigt wird, indem der Apparat zur UV-Lichtbehandlung und der Wärmebehandlungsapparat verwendet werden, niedriger als eine zweite Menge an Energie ist, die zum Reduzieren der Menge an Mikroorganismen auf das Sollniveau für die bestimmte Menge der ersten Teilzusammensetzung benötigt wird, indem nur der Wärmebehandlungsapparat verwendet wird.

13. Verfahren nach Anspruch 12, wobei das Verfahren des Weiteren umfasst:
Herstellen der zweiten Teilzusammensetzung, indem eine Menge an Mikroorganismen in der zweiten Teilzusammensetzung reduziert wird und die zweite Teilzusammensetzung in einen aseptischen Behälter gepackt wird, bevor die erste Teilzusammensetzung und die zweite Teilzusammensetzung kombiniert werden.

## Revendications

1. Système permettant de traiter un produit alimentaire liquide ou semi-liquide, ledit produit alimentaire étant une composition d'une première sous-composition ayant une faible concentration et d'une seconde sous-composition ayant une concentration élevée, dans lequel ladite concentration élevée est supérieure à ladite faible concentration, ledit système comprenant
un appareil de traitement à la lumière ultraviolette (UV) pour réduire une quantité de micro-organismes dans ladite première sous-composition,
un appareil de mélange permettant de combiner de manière aseptique ladite première sous-composition et ladite seconde sous-composition pour donner ledit produit alimentaire liquide ou semi-liquide, et
un appareil de traitement thermique pour réduire la quantité de micro-organismes dans ladite première sous-composition, dans lequel
une première quantité d'énergie nécessaire pour réduire la quantité de micro-organismes à un niveau défini pour une certaine quantité de ladite première sous-composition par l'utilisation dudit appareil de traitement à la lumière UV et dudit appareil de traitement thermique est inférieure à une seconde quantité d'énergie nécessaire pour réduire la quantité de micro-organismes audit niveau défini pour ladite certaine quantité de ladite première sous-composition par l'utilisation dudit appareil de traitement thermique seul.

2. Système selon la revendication 1, dans lequel ledit appareil de traitement thermique est configuré pour chauffer ladite première sous-composition à une température de 75 degrés C.

3. Système selon l'une quelconque des revendications précédentes, dans lequel une longueur d'onde dudit appareil de traitement à la lumière UV est adaptée à un ingrédient contenu dans ladite première sous-composition.

4. Système selon l'une quelconque des revendications précédentes, dans lequel une longueur d'onde dudit appareil de traitement à la lumière UV est adaptée à une concentration de sucre comprise dans ladite première sous-composition.

5. Système selon l'une quelconque des revendications précédentes, dans lequel une longueur d'onde dudit appareil de traitement à la lumière UV est adaptée à un facteur de transmission de lumière de ladite première sous-composition.

6. Système selon l'une quelconque des revendications précédentes, dans lequel un effet dudit appareil de traitement à la lumière UV est adapté à un ingrédient contenu dans ladite première sous-composition.

7. Système selon l'une quelconque des revendications précédentes, dans lequel un effet dudit appareil de traitement à la lumière UV est adapté à une concentration de sucre comprise dans ladite première sous-composition.

8. Système selon l'une quelconque des revendications précédentes, dans lequel un effet dudit appareil de traitement à la lumière UV est adapté à un facteur de transmission de lumière de ladite première sous-composition.

9. Système selon l'une quelconque des revendications précédentes, dans lequel ledit appareil de traitement à la lumière UV comprend au moins une diode électroluminescente (DEL) UV.

10. Système selon l'une quelconque des revendications précédentes, dans lequel ladite première sous-composition comprend de l'eau.

11. Système selon l'une quelconque des revendications précédentes, dans lequel ladite première sous-composition comprend une solution de sucre.

12. Procédé permettant de traiter un produit alimentaire liquide ou semi-liquide, ledit produit alimentaire étant une composition d'une première sous-composition ayant une faible concentration et d'une seconde sous-composition ayant une concentration élevée, dans lequel ladite concentration élevée est supérieure à ladite faible concentration, ledit procédé comprenant
la réduction d'une quantité de micro-organismes par l'exposition de ladite première sous-composition à une lumière ultraviolette (UV),
la combinaison de manière aseptique de ladite première sous-composition et de ladite seconde sous-composition pour donner ledit produit alimentaire liquide ou semi-liquide, et
la réduction, avec un appareil de traitement thermique, de la quantité de micro-organismes dans ladite première sous-composition, dans lequel
une première quantité d'énergie nécessaire pour réduire la quantité de micro-organismes à un niveau défini pour une certaine quantité de ladite première sous-composition par l'utilisation dudit appareil de traitement à la lumière UV et dudit appareil de traitement thermique est inférieure à une seconde quantité d'énergie nécessaire pour réduire la quantité de micro-organismes audit niveau défini pour ladite certaine quantité de ladite première sous-composition par l'utilisation dudit appareil de traitement thermique seul.

13. Procédé selon la revendication 12, ledit procédé comprenant en outre
la préparation de ladite seconde sous-composition par la réduction d'une quantité de micro-organismes dans ladite seconde sous-composition et le conditionnement de ladite seconde sous-composition dans un récipient aseptique avant de combiner ladite première sous-composition et ladite seconde sous-composition.
